# EUROPÄISCHE PATENTANMELDUNG

(11) **EP 1 530 386 A2**
(43) Veröffentlichungstag der Anmeldung: **11.05.2005**
(21) Anmeldenummer: 04450208.6
(22) Anmeldetag: 08.11.2004
(51) Int. Cl.: H04Q 7/32, H04Q 7/22

(54) **Verfahren zum Erstellen eines Datenpakets aus Programm- und ausgewählten Anwenderdaten**

(30) Priorität: 06.11.2003 AT 7762003 U
(71) Anmelder: 2K Development Handels GmbH, 5162 Obertrum am See (AT)
(72) Erfinder: Karpf, Karl-Heinz, 5232 Kirchberg (AT); Dickle, Hussein, 1040 Wien (AT); Kremser, Peter, 5020 Salzburg (AT)
(74) Vertreter: Hübscher, Helmut, Dipl.-Ing.

(57) **Zusammenfassung**

Es wird ein Verfahren zum Erstellen eines Datenpakets aus Programm- und ausgewählten Anwenderdaten zum Versenden dieser Daten an eine Vorrichtung mit einer drahtlosen Datenverbindungen, insbesondere an ein Mobiltelefon, gezeigt, wobei die Vorrichtung sowohl Mittel zum Abarbeiten des Teils des empfangenen Datenpakets, der zu einer auf der Vorrichtung lauffähigen Applikation kompiliert ist, als auch eine Ausgabeeinrichtung aufweist, die in Abhängigkeit eines Abarbeitens des Datenpakets beaufschlagt wird. Um vorteilhafte Voraussetzungen hinsichtlich eines kompakten Datenpakets zu schaffen, wird vorgeschlagen, daß zumindest ein Teil der ausgewählten Anwenderdaten mit den Programmdaten dermaßen zusammengefügt wird, daß nach einem gemeinsamen Kompilieren eine auf der Vorrichtung lauffähige Applikation, insbesondere ein Bytecode einer Java Applikation, entsteht.

## Beschreibung

Die Erfindung betrifft ein Verfahren zum Erstellen eines Datenpakets aus Programm- und ausgewählten Anwenderdaten zum Versenden dieser Daten an eine Vorrichtung mit einer drahtlosen Datenverbindungen, insbesondere an ein Mobiltelefon, wobei die Vorrichtung sowohl Mittel zum Abarbeiten des Teils des empfangenen Datenpakets, der zu einer auf der Vorrichtung lauffähigen Applikation kompiliert ist, als auch eine Ausgabeeinrichtung aufweist, die in Abhängigkeit eines Abarbeitens des Datenpakets beaufschlagt wird.

Um die Verbindungsdauer drahtloser Datenverbindungen zu Mobiltelefonen gering zu halten, ist es aus dem Stand der Technik bekannt, dem Mobiltelefon nicht nacheinander Anwenderdaten zu übertragen, sondern dem Mobiltelefon die Anwenderdaten in einem Stück, nämlich in der Form eines Datenpakets, zu senden. Im Gegensatz zu bekannten Anzeige-Programmen für Webseiten mit deren Nachladen von Anwenderdaten und somit dauernden Datenverbindungen muß daher nur während der Datenübertragung des Datenpakets eine drahtlose Datenverbindung aufrecht sein. Diese Art der Datenübertragung ist vornehmlich dann sinnvoll, wenn vor dem Erstellen eines Datenpakets bekannt ist, welche Daten - im Sinne von Texten, Bildern, Videos etc. - vom Benutzer eines Mobiltelefons verlangt werden, was aber meist der Fall ist, da Benutzer gemäß Ihren Vorlieben oftmals einen beschränkten Interessenbereich aufweisen. Ist solch ein beschränkter Interessenbereich bekannt, so ist auch ein Datenpaket abgestimmt auf einen Benutzer zusammenstellbar, was wenigstens die ausgewählten Anwenderdaten aufweisen muß. Da den Mobiltelefonen ein direktes Abarbeiten von Anwenderdaten fremd ist, werden dem Datenpaket Programmdaten hinzugefügt, die als lauffähige Applikation zum Ausführen der im Datenpaket enthaltenen Anwenderdaten dienen. Von Nachteil bei derartigen Datenpaketen ist jedoch, daß trotz ausgewählter Anwenderdaten die Datenpakete vergleichsweise groß sind. Dies kommt daher, daß Anwenderdaten und Programmdaten mit ihren unterschiedlichen Datenformatierungen nur bedingt zu kompakten Datenpaketen zusammengefaßt werden können. Die Datenpakete benötigen daher hohe Kapazitäten - sei es bei der Datenübertragung oder bei der Speicherung auf dem jeweiligen Mobiltelefon -, so daß sich derzeit diese Art der Datenübertragung vergleichsweise geringer Anwendung erfreut. Außerdem hat sich gezeigt, daß auf machen Mobiltelefonen Probleme bei der Abarbeitung der Programmdaten auftreten, da die Mittel solcher Mobiltelefone Schwierigkeiten in der Erkennung der für die Programmdaten notwendigen Anwenderdaten im empfangenen Datenpaket haben.

Der Erfindung liegt daher ausgehend vom eingangs geschilderten Stand der Technik die Aufgabe zugrunde, ein Verfahren zum Erstellen eines Datenpakets derart auszugestalten, daß nicht nur ein vergleichsweise kompaktes Datenpaket aus Programmdaten und ausgewählten Anwenderdaten erzeugt werden kann, sondern auch dieses Datenpaket ohne weiteres von Vorrichtungen mit drahtlosen Datenverbindungen, insbesondere von Mobiltelefonen, abarbeitbar ist.

Die Erfindung löst die gestellte Aufgabe dadurch, daß für ein kompakt erstelltes Datenpaket zumindest ein Teil der ausgewählten Anwenderdaten mit den Programmdaten dermaßen zusammengefügt wird, daß nach einem gemeinsamen Kompilieren eine auf der Vorrichtung lauffähige Applikation, insbesondere ein Bytecode einer Java Applikation, entsteht.

Wird zumindest ein Teil der ausgewählten Anwenderdaten mit den Programmdaten dermaßen zusammengefügt, daß nach einem gemeinsamen Kompilieren eine auf der Vorrichtung lauffähige Applikation entsteht, so kann sichergestellt werden, daß zumindest der zusammengefügte Teil aus Programmund Anwenderdaten von der Vorrichtung abgearbeitet werden kann. Es ist daher nicht wie beim Stand der Technik der Fall, daß gegebenenfalls gar keine Ausgabe am Mobiltelefon erfolgt, was zumindest die Anforderungen eines Benutzers teilweise erfüllt. Meldet der Benutzer das Fehlen an Anwenderdaten, so können auf einfache Weise mit einem Erhöhen des Teils an zusammengefügten Anwenderdaten Schwierigkeiten der Vorrichtung beim Schwierigkeiten der Vorrichtung beim Bearbeiten eines empfangenen Datenpakets ausgeschlossen werden. Insbesondere ist jedoch von Vorteil, daß die Größe des Datenpakets durch das erfindungsgemäße Verfahren vorteilhaft klein gehalten werden kann. Der Erfindung liegt nämlich die Erkenntnis zugrunde, daß mit einem Zusammenfügen von Anwender- und Programmdaten mit einem anschließenden gemeinsamen Kompilieren zu einer ausführbaren Applikation alle Vorteile des betreffenden Compilers verwendet werden können, um ein kompaktes Datenpaket zu erstellen. Die Anwender- und Programmdaten weisen nämlich eine gleiche Datenformatierung auf, was vorteilhaft zur Verringerung der Größe des Datenpakets ist. Das erfindungsgemäße Datenpaket ist daher außerdem aufgrund der vergleichsweise geringen Größe für eine drahtlose Datenübertragung bzw. für Vorrichtungen mit einem geringen Speicher besonders gut geeignet.

Werden beim Zusammenfügen der Anwender- und Programmdaten nur solche Programmdaten hinzugezogen, die für eine Ausgabe der ausgewählten Anwenderdaten an der Ausgabeeinrichtung der Vorrichtung notwendig sind, so kann gegenüber bekannten Datenpaketen die Größe des Datenpakets den Anforderungen entsprechend angepaßt werden. Es müssen daher nicht wie beim Stand der Technik Programmdaten hinzugefügt werden, die jegliche Anwenderdaten abarbeiten können. So ist es beispielsweise nicht notwendig, Programmdaten zum Anzeigen von Bildern mitzuübertragen, wenn lediglich Anwenderdaten in Form von Texten an der Ausgabeeinrichtung der Vorrichtung auszugeben sind. Im Gegensatz zum Stand der Technik kann somit verfahrensgemäß ein Datenpaket geschaffen werden, das stets auf seine geringste Größe abgestellt ist.

Werden vor dem Zusammenfügen der Anwender- und Programmdaten die ausgewählten Anwenderdaten in Abhängigkeit der vorgegebenen Leistungsdaten der Ausgabeeinrichtung der Vorrichtung beaufschlagt, so können die Anwenderdaten vor einem Zusammenfügen mit den Programmdaten an die Voraussetzungen der Vorrichtung vorteilhaft angepaßt werden. Der Vorrichtung werden daher nur Anwenderdaten zur Verfügung gestellt, die für die jeweilige Vorrichtung optimiert sind, womit unnötige Bestandteile der Anwenderdaten nicht übertragen werden. So ist beispielsweise vorstellbar, die Auflösung von Bildern vor einem Einfügen in ein Datenpaket zu vermindern, wenn diese Auflösung auf dem Display der Vorrichtung gar nicht darstellbar ist.

Anhand eines Ausführungsbeispiels wird das erfindungsgemäße Verfahren beispielsweise beschrieben.

Zunächst werden Anwenderdaten, wie Texte, Fotos, Videos, und so weiter, zusammengestellt. Dieses Zusammenstellen kann von einem Benutzer erfolgen, der diese ausgewählten Anwenderdaten auf sein Mobiltelefon übertragen haben möchte. Es ist jedoch auch denkbar, daß im Auftrag eines Benutzers diese ausgewählten Anwenderdaten zusammengestellt werden. Solch ein Zusammen kann über ein Client-Programm erfolgen. Sind die Anwenderdaten zusammengestellt bzw. ausgewählt, so können diese mit dem Client-Programm oder durch eine andere Weise auf einen zentralen Rechner mit einer Datenbank übertragen werden, beispielsweise über eine Netzwerkverbindung. Die übertragenen Anwenderdaten werden vom Rechner gemäß dem zugehörigen Benutzer identifiziert und in die Datenbank abgelegt. Die Benutzerdaten bzw. Identifikationsdaten können ebenfalls den Anwenderdaten hinzugefügt werden. Für einen Datenabruf, also einem Auftrag an den Rechner die ausgewählten Anwenderdaten zum jeweiligen berechtigten Benutzer des Mobiltelefons zu übertragen, stehen im allgemeinen zwei Möglichkeiten zur Verfügung. So kann der Auslöser für einen Datenabruf entweder anbietergesteuert oder benutzergesteuert sein. Im letzteren Fall sendet der Benutzer eine Nachricht an den Rechner, beispielsweise über SMS oder über die Netzwerkverbindung des Rechners, um den Datenabruf auf sein Mobiltelefon zu beginnen. Im Falle, daß ein Anbieter ausgewählte Anwenderdaten zusammenstellt, wird dem Benutzer eine Nachricht auf sein Mobiltelefon gesandt, gemäß dieser Nachricht ein Datenabruf vom Benutzer durchgeführt werden kann, was z.B. mit einem bekannten "Wap-Pusch" möglich ist. Sollen nun Daten vom Rechner abgerufen werden, so wird ein Programm gestartet, das das erfindungsgemäße Verfahren zum Erstellen eines Datenpakets durchführt. Zunächst werden zu den Anwenderdaten diejenigen Programmdaten ausgewählt, die zur Abarbeitung der Anwenderdaten auf dem Mobiltelefon des Benutzers benötigt werden. Ist beispielsweise eine Anzeige von Bildern gefordert, so werden nur die Programmdaten ausgewählt, die für eine Darstellung der Bilder am Display der Vorrichtung notwendig sind. Anschließend werden die ausgewählten Anwenderdaten mit den notwendigen Programmdaten dermaßen zusammengefügt, daß nach einem gemeinsamen Kompilieren eine auf der Vorrichtung lauffähige Applikation entsteht. Die Anwenderdaten können beispielsweise in vordefinierte Bereiche der Programmdaten eingefügt werden, so daß beim Abarbeiten der Programmdaten klar zwischen Programmdaten und Anwenderdaten unterschieden werden kann. Das Abarbeiten der Programmdaten erfolgt am Mobiltelefon mit Hilfe einer Java Virtual Machine (im Java Runtime Environment), mit der die lauffähige Applikation als in einem Bytecode einer Java Applikation abgearbeitet wird. Das gesamte Datenpaket stellt also gesamt eine auf dem Mobiltelefon lauffähige Applikation dar, so daß auch ein Abarbeiten der Anwenderdaten vom Mobiltelefon gewährleistet werden kann. Nach dem Übertragen des Datenpakets, muß keine drahtlose Datenverbindung aufrecht bleiben, da ja alle ausgewählten Anwenderdaten auf dem Mobiltelefon des Benutzers vorhanden sind. Außerdem entsteht mit einem Zusammenfügen von ausgewählten Anwenderdaten und Programmdaten zu einer lauffähigen Applikation eine kompakte Form eines Datenpakets, was besonders vorteilhaft für eine drahtlose Datenübertragung bzw. für den Speicherbedarf auf einem Mobiltelefon ist. Die Anwenderdaten können auch noch vor dem Zusammenfassen auf die Voraussetzungen des jeweiligen Endgeräts angepaßt werden, in dem bei der Anforderung der Übertragung des Datenpakets das jeweilige Mobiltelefon erkannt wird und diese Kenndaten dem Rechner übermittelt werden. Bei solch einer Anpassung bzw. Optimierung kann die Bildschirmgröße, Auflösung und Farbtiefe des Displays des Mobiltelefons sowie auch die maximale Dateigröße für ausführbare Java Applikationen auf dem Mobiltelefon berücksichtigt werden. Gegenüber dem Stand der Technik ist somit ein Verfahren gegeben, daß stets nach den ausgewählten Anwenderdaten ein Datenpaket für Mobiltelefone erstellt, daß an die Übertragungskapazität von drahtlosen Datenverbindungen sowie den Voraussetzungen der betreffenden Mobiltelefone bestmöglich angepaßt ist.

Weiters besteht die Möglichkeit die Programmdaten des Datenpakets mit Funktionen für einen Datenabgleich zu versehen. Damit können die Anwenderdaten des empfangenen Datenpakets bei Bedarf bzw. auf Anforderung des Benutzers des Mobiltelefons mit anderen Anwenderdaten ausgetauscht bzw. ergänzt werden. Vorteilhaft müssen damit die Programmdaten nicht wiederholt übertragen werden, im Falle daß sich hinsichtlich der neu empfangenen Anwenderdaten der Funktionsumfang der Programmdaten nicht zu ändern hat.

Es ist auch vorstellbar, in den Anwenderdaten Berechtigungsdaten für einen Zahlungsverkehr hinzuzufügen. Diese kann beispielsweise die Telefonnummer eines Mobiltelefons darstellen. Mit einem gemeinsamen Kompilieren der Berechtigungsdaten aufweisenden Anwenderdaten mit den Programmdaten, ist es somit vergleichsweise schwer, diese Berechtigungsdaten auszulesen. Dies bietet Vorteile, da mit einem Kopieren eines empfangen Datenpakets auf ein anderes Mobiltelefon, solche Berechtigungsdaten gezwungenermaßen mit übertragen werden und so eine unbefugte Berechtigung anhand eines Vergleichs der gespeicherten mit der aktuellen Telefonnummer des anderen Mobiltelefons erkannt werden kann.

## Patentansprüche

1. Verfahren zum Erstellen eines Datenpakets aus Programm- und ausgewählten Anwenderdaten zum Versenden dieser Daten an eine Vorrichtung mit einer drahtlosen Datenverbindungen, insbesondere an ein Mobiltelefon, wobei die Vorrichtung sowohl Mittel zum Abarbeiten des Teils des empfangenen Datenpakets, der zu einer auf der Vorrichtung lauffähigen Applikation kompiliert ist, als auch eine Ausgabeeinrichtung aufweist, die in Abhängigkeit eines Abarbeitens des Datenpakets beaufschlagt wird, **dadurch gekennzeichnet, daß** für ein kompakt erstelltes Datenpaket zumindest ein Teil der ausgewählten Anwenderdaten mit den Programmdaten dermaßen zusammengefügt wird, daß nach einem gemeinsamen Kompilieren eine auf der Vorrichtung lauffähige Applikation, insbesondere ein Bytecode einer Java Applikation, entsteht.

2. Verfahren nach Anspruch 1, **dadurch gekennzeichnet, daß** beim Zusammenfügen der Anwender- und Programmdaten nur solche Programmdaten hinzugezogen werden, die für eine Ausgabe der ausgewählten Anwenderdaten an der Ausgabeeinrichtung der Vorrichtung notwendig sind.

3. Verfahren nach Anspruch 1 oder 2, **dadurch gekennzeichnet, daß** vor dem Zusammenfügen der Anwender- und Programmdaten die ausgewählten Anwenderdaten in Abhängigkeit der vorgegebenen Leistungsdaten der Ausgabeeinrichtung der Vorrichtung beaufschlagt werden.
